# EUROPÄISCHE PATENTSCHRIFT

(11) **EP 2 427 288 B1**
(45) Veröffentlichungstag und Bekanntmachung des Hinweises auf die Patenterteilung: **23.01.2013**
(21) Anmeldenummer: 10723336.3
(22) Anmeldetag: 06.05.2010
(51) Int. Cl.: B23B 5/16

(54) **Rohrbearbeitungsvorrichtung**
Tube machining device
Dispositif d'usinage de tubes

(30) Priorität: 06.05.2009 DE 102009019867
(43) Veröffentlichungstag der Anmeldung: 14.03.2012
(73) Patentinhaber: Illinois Tool Works Inc., Glenview, IL 60026 (US)
(72) Erfinder: LIER, Andreas, 78247 Hilzingen (DE)
(74) Vertreter: Meissner, Bolte & Partner
(86) Internationale Anmeldenummer: PCT/IB2010/052005
(87) Internationale Veröffentlichungsnummer: WO 2010/128479

(56) Entgegenhaltungen:
- EP-A1- 2 070 614
- DE-A1- 19 726 498
- DE-U1- 20 200 351
- US-A- 5 531 550

## Beschreibung

Die vorliegende Erfindung betrifft eine Rohrbearbeitungsvorrichtung nach dem Oberbegriff des Patentanspruches 1. Demnach betriff die Erfindung eine Rohrbearbeitungsvorrichtung zum Bearbeiten eines rohrförmigen Körpers, insbesondere zum Bearbeiten des Endes eines Rohres, wobei die Rohrbearbeitungsvorrichtung eine Innenspanneinrichtung mit mindestens drei Spannkeilen zum lösbaren Fixieren der Innenspanneinrichtung an einem Endbereich eines zu bearbeitenden Rohres sowie eine Werkzeugaufnahmeeinrichtung zum Aufnehmen von mindestens einem für eine Rohrbearbeitung vorgesehenen Werkzeug aufweist. Die Werkzeugaufnahmeeinrichtung ist dabei konzentrisch zu der axialen Längsachse der Rohrbearbeitungsvorrichtung derart angeordnet, dass diese um die Längsachse relativ zu der Innenspanneinrichtung drehbar ist. Zum lösbaren Fixieren der Innenspanneinrichtung am Endbereich des zu bearbeitenden Rohres ist vorgesehen, dass die Spannkeile der Innenspanneinrichtung radial zu der axialen Längsachse der Rohrbearbeitungsvorrichtung relativ zu dem zu bearbeitenden Rohr bewegbar sind.

Eine derartige Rohrbearbeitungsvorrichtung ist zumindest dem Prinzip nach bereits aus dem Stand der Technik bekannt. Beispielsweise betrifft die Druckschrift EP 0 855 944 B1 eine transportable Vorrichtung für die spanabhebende Bearbeitung der Enden von rohrförmigen Werkstücken, wie zum Beispiel für die spanabhebende Bearbeitung eines Endbereiches eines Rohres.

Die aus diesem Stand der Technik bekannte Vorrichtung weist eine Werkzeugaufnahmeeinrichtung zur Aufnahme eines Werkzeugs sowie einen Motor und eine Getriebeanordnung zur Drehung der Werkzeugaufnahmeeinrichtung um eine axiale Längsachse der Rohrbearbeitungsvorrichtung auf. Das Werkzeug ist eine Schneidplatte zur Rohrendenbearbeitung, welche als Wendeplatte ausgebildet ist und zwei Aktivschneidkanten aufweist. Zur Halterung des mit der Rohrbearbeitungsvorrichtung zu bearbeitenden Rohres ist eine Innenspanneinrichtung vorgesehen, welche in den Endbereich des zu bearbeitenden Rohres eingeführt werden kann. Die Innenspanneinrichtung weißt drei Spannkeile auf, mit deren Hilfe das Rohr gehalten wird. Durch eine Drehbewegung einer mit den Spannkeilen in Wirkeingriff stehenden Spindel werden die drei Spannkeile im Inneren des Rohres radial nach Außen geklappt, bis sie mit dem Rohr in Kontakt kommen und diese somit fixieren.

Weiterhin ist beispielsweise aus der Druckschrift US 5,531,550 A eine Rohrbearbeitungsvorrichtung bekannt, welche eine Innenspanneinrichtung mit drei Spannkeilen aufweist. Die Spannkeile sind in einem an einer Betätigungsstange angeordneten Radialführungskörper in radialer Richtung geführt. Die Betätigungsstange einschließlich des Radialführungskörpers sind gegenüber einem Masten in Richtung einer dem Masten und der Betätigungsstange gemeinsamen axialen Längsachse bewegbar. Der Mast weißt drei sich unter einem spitzen Winkel zur Längsachse erstreckenden schrägen Flächen auf, auf welchen die Spannkeile in axialer Richtung gleitend bewegt werden können, so dass bei einer axialen Bewegung die Spannkeile gleichzeitig auch in radialer Richtung und somit in Richtung einer Innenwand eines zu spannenden Rohres bewegt werden.

Bei den aus dem Stand der Technik bekannten und vorstehend exemplarisch beschriebenen Rohrbearbeitungsvorrichtungen kommt in der Regel eine Innenspanneinrichtung zum Einsatz, bei welcher die Spannkeile mit Hilfe von Federn oder ähnlichen Bauteilen miteinander verbunden sind, wobei diese Federn auch dazu dienen, die Spannkeile in ihren radialen Führungen zu halten. Dabei besteht grundsätzlich die Gefahr, dass beispielsweise auf Grund eines Federbruches die Spannkeile nicht mehr in ihren radialen Führungen gehalten werden und somit aus ihren radialen Führungen heraus gleiten und im zu bearbeitenden Rohr verloren gehen. Dies trifft insbesondere dann zu, wenn die Innenspanneinrichtung der Rohrbearbeitungsvorrichtung in einen oben liegenden Endbereich eines zu bearbeitenden Rohres eingeführt wird, infolgedessen bei einem Federbruch die aus den radialen Führungen herausgegleiteten Spannkeile aufgrund der Schwerkraft in das zu bearbeitende Rohr fallen.

Bei der Bearbeitung von Rohrenden einer bereits fertig gestellter Anlagen, wie beispielsweise eines Boilers oder einer chemischen Anlage, können in dem zu bearbeitenden Rohr verlorengegangene Fremdkörper häufig nur noch mit hohem Aufwand wieder entfernt werden, da derartige Anlagen in der Regel nicht bzw. nicht ohne Weiteres geöffnet werden können, um etwaige Fremdkörper zu entfernen.

Selbst bei einer Rohrbearbeitungsvorrichtung, bei welcher beispielsweise aufgrund einer konstruktiven Abänderung der Innenspanneinrichtung ein Herausfallen der Spannkeile wirksam verhindert werden kann, besteht grundsätzlich die Gefahr, dass Fremdkörper, wie beispielsweise die bei einer spanabhebenden Bearbeitung des Rohrendes anfallende Späne, in das zu bearbeitende Rohr fallen und nach der Bearbeitung des Rohrendes wieder entsprechend entfernt werden müssen.

Auf Grundlage dieser Problemstellung liegt der vorliegenden Erfindung die Aufgabe zugrunde, eine Rohrbearbeitungsvorrichtung der Eingangs genannten Art dahingehend weiterzubilden, dass in einer leicht zu realisierenden aber dennoch effektiven Weise wirksam verhindert werden kann, dass bei der Bearbeitung des Rohres Fremdkörper in das Rohr fallen können.

Diese Aufgabe wird mit einer Rohrbearbeitungsvorrichtung der Eingangs genannten Art erfindungsgemäß durch eine Rohrbearbeitungsvorrichtung gemäß Anspruch 1 gelöst.

Vorteilhafte Weiterbildungen der erfindungsgemäßen Rohrbearbeitungsvorrichtung sind in den Unteransprüchen angegeben.

Die mit der erfindungsgemäßen Lösung erzielbaren Vorteile liegen auf der Hand: durch das Vorsehen eines Dichtkörpers, welcher zusammen mit der Innenspanneinrichtung in den Endbereich des zu bearbeitenden Rohres einführbar ist, kann vor Beginn der Bearbeitung eine räumliche Unterteilung des Rohres in einen ersten, der Werkzeugaufnahme zugewandten Bereich und einen zweiten der Werkzeugaufnahme abgewandten Bereich erzielt werden. Diese räumliche Unterteilung dient zum Abdichten des der Werkzeugaufnahmeeinrichtung abgewandten zweiten Bereiches gegenüber dem der Werkzeugaufnahmeeinrichtung zugewandten ersten Bereichs, so dass unbeabsichtigt keine Fremdkörper von dem ersten Bereich in den zweiten Bereich gelangen können.

Da der mit dem in den Endbereich des Rohres eingeführten Dichtkörper ausgebildete zweite Bereich des Rohres von dem zu bearbeitenden Rohrende weiter entfernt ist als der erste Bereich des Rohres, kann somit wirkungsvoll verhindert werden, dass Fremdkörper, wie beispielsweise aufgrund eines Defekts der Innenspanneinrichtung gelöste Spannkeile oder aber auch die bei einer spanabhebenden Bearbeitung anfallenden Späne, in das zu bearbeitende Rohr fallen und in dem Rohr verloren gehen.

Nach der Bearbeitung des Rohres kann die Innenspanneinrichtung zusammen mit dem Dichtkörper aus dem Endbereich des Rohres herausgezogen werden, wobei beim Herausführen des Dichtkörpers gegebenenfalls in das Rohr gefallende Fremdkörper wieder aus dem Rohr entfernt werden.

Erfindungsgemäß ist den Dichtkörper nicht nur in Längsrichtung der Rohrbearbeitungsvorrichtung hinter der Werkzeugaufnahmeeinrichtung, sondern auch hinter der Innenspanneinrichtung vorgesenen. Dann nämlich befindet sich die Innenspanneinrichtung mit den zur Innenspanneinrichtung gehörenden axial verschieblichen Spannkeile in dem mit dem Dichtkörper räumlich unterteilten ersten Bereich, wenn die in den Spanneinrichtung zusammen mit dem Dichtkörper in den Endbereich des zu bearbeitenden Rohres eingeführt ist. Somit können in dem der Werkzeugaufnahmeeinrichtung zugewandten ersten Bereich nicht nur die beispielsweise bei einer spanabhebenden Bearbeitung anfallenden Späne, sondern auch beispielsweise die aufgrund eines Defekts der Innenspanneinrichtung heraus fallenden Spannkeile aufgefangen und mühelos entfernt werden.

Erfindungsgemäß ist ebenfous vorgesehen, dass die Innenspanneinrichtung und der Dichtkörper an einer in axialer Längsrichtung relativ zu der Werkzeugaufnahmeeinrichtung bewegbaren Betätigungsstange befestigt sind. Hierbei handelt es sich um eine effektive aber dennoch leicht zu realisierende Möglichkeit, mit der ohne zusätzliche Aufwand zusammen mit der Innenspanneinrichtung auch der Dichtkörper in den Endbereich des zu bearbeitenden Rohres eingeführt werden kann.

Die erfindungsgemäße Lösung zeichnet sich nicht nur dadurch aus, dass durch das Vorsehen des Dichtkörpers wirksam verhindert werden kann, dass Fremdkörper in dem zu bearbeitenden Rohr fallen und verloren gehen. Insbesondere wenn die Innenspanneinrichtung zwischen dem Dichtkörper und der Werkzeugaufnahmeeinrichtung angeordnet ist, so dass zum Verbinden der Rohrbearbeitungsvorrichtung mit dem zu bearbeitenden Rohr zunächst der Dichtkörper und anschließend die Innenspanneinrichtung in den Endbereich des Rohres eingeführt werden, kommt dem Dichtkörper eine zusätzliche Führungsfunktion zu, so dass das Einführen der Innenspanneinrichtung in den Endbereich des Rohres vereinfacht wird. Insbesondere kann wirkungsvoll verhindert werden, dass die einzelnen Bauteile der Innenspanneinrichtung, wie etwa die Spannkeile oder gegebenenfalls vorgesehene Federelemente zum Verbinden der Spannkeile, beim Einführen der Innenspanneinrichtung an der umlaufenden Kante des Endbereiches des zu bearbeitenden Rohres anstoßen und möglicherweise beschädigt werden.

Um wirkungsvoll verhindern zu können, dass gegebenenfalls Fremdkörper, welche beispielsweise bei oder zur Vorbereitung der Bearbeitung des Rohrendes in den Endbereich des Rohres fallen und verloren gehen, sollte der Dichtkörper vorzugsweise derart ausgebildet sein, dass er in seinem im Endbereich des zu bearbeitenden Rohres eingeführten Zustand zumindest bereichsweise formschlüssig an der Innenwand des zu bearbeitenden Rohres anliegt. Auf diese Weise kann ein ungewollter Fremdkörperübergang von dem der Werkzeugaufnahmeeinrichtung zugewandten ersten Bereich in den der Werkzeugaufnahmeeinrichtung abgewandten zweiten Bereich verhindert bzw. zumindest begrenzt werden.

Hierbei ist es beispielsweise denkbar, wenn der Dichtkörper mindestens ein als Bürstendichtung ausgebildetes Dichtelement aufweist, welches in dem im Endbereich des zu bearbeitenden Rohres eingeführten Zustand des Dichtkörpers im Hinblick auf einen ungewollten Fremdkörperübergang einen Spalt zwischen dem Dichtkörper und der Innenwand des zu bearbeitenden Rohres abdichtet. Das Vorsehen einer derartigen Bürstendichtung hat nicht nur den Vorteil, dass in einer leicht zu realisierenden aber dennoch effektiven Weise ein Fremdkörperübergang von dem mit Hilfe des Dichtkörpers ausgebildeten ersten Bereich des zu bearbeitenden Rohres zu dem zweiten Bereich des zu bearbeitenden Rohres verhindert werden kann, sondern auch dass die Rohrbearbeitungsvorrichtung mit dem in dem Endbereich des zu bearbeitenden Rohres einführbaren Dichtkörper für die Bearbeitung von Rohrenden mit unterschiedlichen Querschnittsdurchmessern geeignet ist.

Der Bürstenbesatz der Bürstendichtung sollte demnach vorzugsweise radial von dem Dichtkörper abstehen und eine Besatzdichte aufweisen, welche an die mittlere Korngröße der zu erwartenden Fremdkörper angepasst ist. Die sich in Axialrichtung erstreckende Länge der einzelnen Borsten der Bürstendichtung bestimmt dabei den Bereich, in welchem die Rohrbearbeitungsvorrichtung mit ein und demselben Dichtkörpers zur Bearbeitung der Enden von Rohren unterschiedlichen Querschnittsdurchmessern geeignet ist.

Grundsätzlich ist es bevorzugt, wenn der Dichtkörper lösbar an der Rohrbearbeitungsvorrichtung befestigt ist, um ein gegebenenfalls erforderliches Austauschen des Dichtkörpers möglichst rasch vornehmen zu können. Beispielsweise ist es denkbar, den Dichtkörper an der Stirnseite einer in axialer Längsrichtung relativ zu der Werkzeugaufnahmeeinrichtung bewegbaren Betätigungsstange zu befestigen, wobei hierzu eine am Ende der Betätigungsstange aufgeschraubte Mutter dient. Selbstverständlich kommen allerdings auch andere Möglichkeiten für die vorzugsweise lösbare Befestigung des Dichtkörpers an der Rohrbearbeitungsvorrichtung in Frage.

Alternativ oder zusätzlich zu der bereits diskutierten Ausführungsform des Dichtkörpers, bei welchem mindestens ein als Bürstendichtung ausgebildetes Dichtelement vorgesehen ist, ist es ferner denkbar, wenn der Dichtkörper mindestens ein als Lippendichtung ausgebildetes Dichtelement aufweist, welches in dem im Endbereich des zu bearbeitenden Rohres eingeführten Zustand des Dichtkörpers einen Spalt zwischen dem Dichtkörper und der Innenwand des zu bearbeiteten Rohres abdichtet. Die durch das Vorsehen eines als Lippendichtung ausgebildeten Dichtelements erzielbaren Vorteile sind mit den Vorteile vergleichbar, die bei einem als Bürstendichtung ausgebildeten Dichtelement auftreten, so dass zur Vermeidung von Wiederholungen auf die vorherigen Ausführungen verwiesen wird.

In einer weiteren vorteilhaften Realisierung des Dichtkörpers ist es grundsätzlich denkbar, dass dieser aus einem elastischen Werkstoff gebildet und unter Querschnittsverringerung elastisch deformierbar ist. Demnach kommt beispielsweise als Material für den Dichtkörper ein elastisches Schaummaterial, wie etwa Polyurethan, in Frage. Je nach Anwendungsfall sollten allerdings der Dichtkörper und das gegebenenfalls zum Dichtkörper gehörende Dichtelement hitzebeständig sein, da sich bei der Bearbeitung des Rohres der Endbereich des Rohres entsprechend erwärmt. Geeignete hitzebeständige Dichtkörper sind allgemein aus dem Stand der Technik bekannt und werden hierin nicht näher beschrieben.

Wie bereits angedeutet, ist es bevorzugt, wenn der Dichtkörper vor der Innenspanneinrichtung angeordnet ist und somit bei der Befestigung der Rohrbearbeitungsvorrichtung an dem zu bearbeitenden Rohr als erster in den Endbereich des Rohres eingeführt wird. Um das Einführen des Dichtkörpers in den Rohr-Endbereich zu vereinfachen, ist es grundsätzlich denkbar, dass der Dichtkörper eine sich verjüngende, insbesondere konische Längsschnittgeometrie aufweist, wobei der verjüngte Endbereich des Dichtkörpers in eine Richtung entgegengesetzt zur Werkzeugaufnahmerichtung zeigt. Demnach wird der Dichtkörper über seinen verjüngten Endbereich in das zu bearbeitende Rohr eingeführt, so dass eine Selbstjustierung stattfindet.

Ferner ist es bevorzugt, wenn der Dichtkörper mindestens eine sich parallel zur axialen Längsrichtung der Rohrbearbeitungsvorrichtung erstreckende Führungsfläche aufweist, mit Hilfe welcher der Dichtkörper während des Einführvorganges entlang der Innenwand des Rohres geführt wird. Hierbei handelt es sich um eine bevorzugte Weiterbildung, die das Befestigen der Rohrbearbeitungsvorrichtung an dem zu bearbeitenden Rohr vereinfacht.

Die Erfindung wird im Folgenden unter Bezugnahme auf die beiliegenden Zeichnungen anhand einer beispielhaften Ausführungsform der erfindungsgemäßen Rohrbearbeitungsvorrichtung beschrieben.

Es zeigen:
- Fig. 1: eine teilgeschnitte Seitenansicht einer exemplarischen Ausführungsform der erfindungsgemäßen Rohrbearbeitungsvorrichtung, wobei die Rohrbearbeitungsvorrichtung an dem Endbereich eines zu bearbeitenden Rohres befestigt ist;

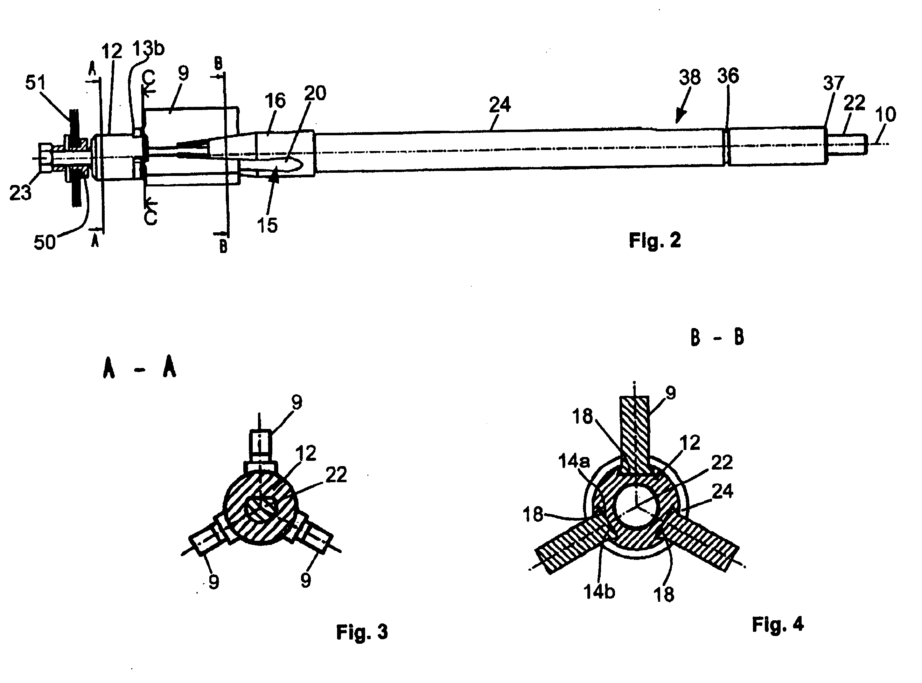

- Fig. 2: Teile der in Fig. 1 dargestellten exemplarischen Ausführungsform der erfindungsgemäßen Rohrbearbeitungsvorrichtung zum Einsatz kommenden Innenspanneinrichtung;
- Fig. 3: einen Schnitt entlang der Achse A-A der Fig. 2;
- Fig. 4: einen Schnitt entlang der Achse B-B der Fig. 2;
- Fig. 5: einen Schnitt entlang der Achse C-C der Fig. 2, wobei der Übersichtlichkeit halber jedoch auf eine Darstellung von Spannkeilen abgesehen wurde;
- Fig. 6: einen Schnitt entlang der Achse D-D der Fig. 5; und
- Fig. 7: einen Mast der Innenspanneinrichtung gemäß Fig. 2 in perspektivischer Darstellung.

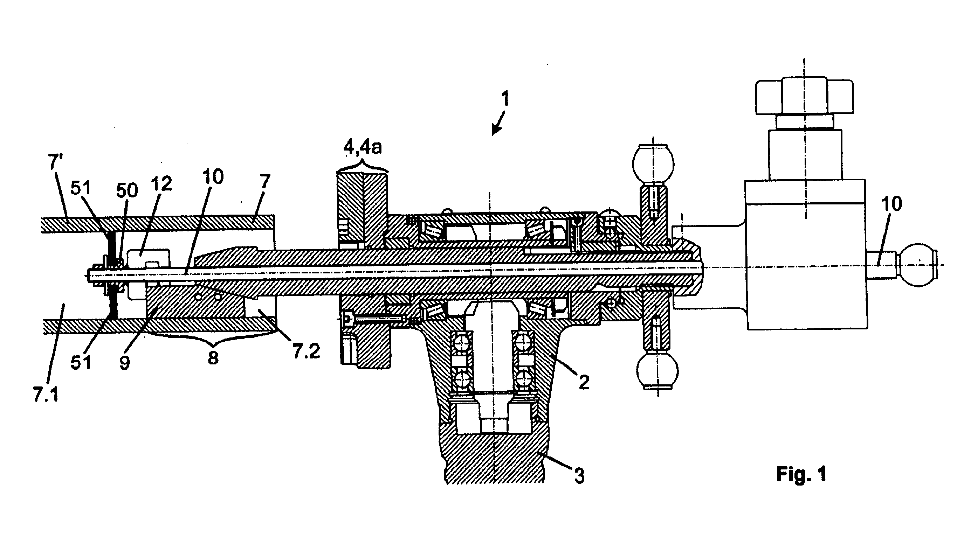

In den beiliegenden Figuren ist eine exemplarische Ausführungsform der erfindungsgemäßen Rohrbearbeitungsvorrichtung 1 dargestellt, welche ausweislich der Darstellung in Fig. 1 ein Gehäuse 2 und eine Handhabe 3 aufweist. In einer Werkzeugaufnahmeeinrichtung 4 ist ein in Fig. 1 nicht explizit dargestellter Werkzeugträger angeordnet bzw. aufgenommen, welcher dazu dient, ein Werkzeug beispielsweise in Form einer Schneidplatte (Wendeplatte) zu tragen. Die in Fig. 1 nicht gezeigte Schneidplatte dient beispielsweise dazu, das der Rohrbearbeitungsvorrichtung 1 bzw. dem Werkzeugträger zugewandte Ende eines Rohres 7 abzuschrägen, d. h. mit einer Fase zu versehen, und somit auf einen Schweißprozess vorzubereiten.

Alternativ oder zusätzlich hierzu ist selbstverständlich aber auch der Einsatz anderer Werkzeuge zur Bearbeitung von Rohrenden, wie beispielsweise Schleifwerkzeuge oder Werkzeuge zum Entgraten oder Plan-Bearbeiten, denkbar, insbesondere aber auch der Einsatz von Werkzeugen zur Bearbeitung des Rohres an seiner Innen-und/oder Außenseite, beispielsweise ein Gewindestahl zum Schneiden von Gewinden an der Rohraußen- und/oder Rohrinnenseite oder ein Drehstahl zum Abdrehen der Rohraußen- und/oder Rohrinnenseite.

Für die Aufnahme beispielsweise eines zweiten und eines dritten Werkzeugträgers, welche entweder die gleichen Werkzeuge oder aber auch andere Werkzeuge zur simultanen Ausführung mehrer Arbeitsgänge aufnehmen, können neben der Werkzeugträgeraufnahme 4a weitere Werkzeugträgeraufnahmen an der Werkzeugaufnahmeeinrichtung 4 angeordnet sein. Die Werkzeugaufnahmeeinrichtung 4 zusammen mit dem Werkzeugträger und der von dem Werkzeugträger gehaltenen Schneidplatte ist konzentrisch zu einer axialen Längsachse 10 der Rohrbearbeitungsvorrichtung 1 angeordnet und um diese Längsachse 10 drehbar gelagert.

Zum sicheren Fixieren des Rohrs 7 vor bzw. während einer geplanten Bearbeitung weist die erfindungsgemäße Rohrbearbeitungsvorrichtung 1 eine Innenspannvorrichtung 8 mit drei Spannkeilen 9 auf, welche in das Rohr 7 eingeführt werden kann. Die drei Spannkeile 9 bestehen jeweils aus einer Metallplatte, deren Platten-ebene sich jeweils in radialer und in axialer Richtung zur Längsachse 10 erstreckt.

Die Spannkeile 9 sind durch Radialführungsflächen 13a eines Radialführungskörpers 12 radial und durch spitzwinkelig zur Längsachse sich erstreckende Schrägführungflächen 14a eines Schrägführungskörpers 16 schräg geführt, wobei der Radialführungskörper 12 relativ zu dem Schrägführungskörper 16 axial zu der Längsachse 10 bewegbar ist, so dass die Spannkeile 9, parallel zueinander bleibend, in Längsrichtung und dabei gleichzeitig radial bewegt werden. Die Radialführungsflächen 13a des Radialführungskörpers 12 und Radialführungsflächen 13b der Spannkeile 9 hintergreifen einander quer zur Radialrichtung, so dass die Spannkeile 9 am Radialführungskörper 12 in axialer Richtung gehalten werden. Die Schrägführungsflächen 14a des Schrägführungskörpers 16 und von ihnen geführte Schrägführungsflächen 14b der Spannkeile 9 hintergreifen einander quer zur Schrägrichtung, so dass die Spannkeile 9 am Schrägführungskörper 16 quer zur Schrägrichtung gehalten werden.

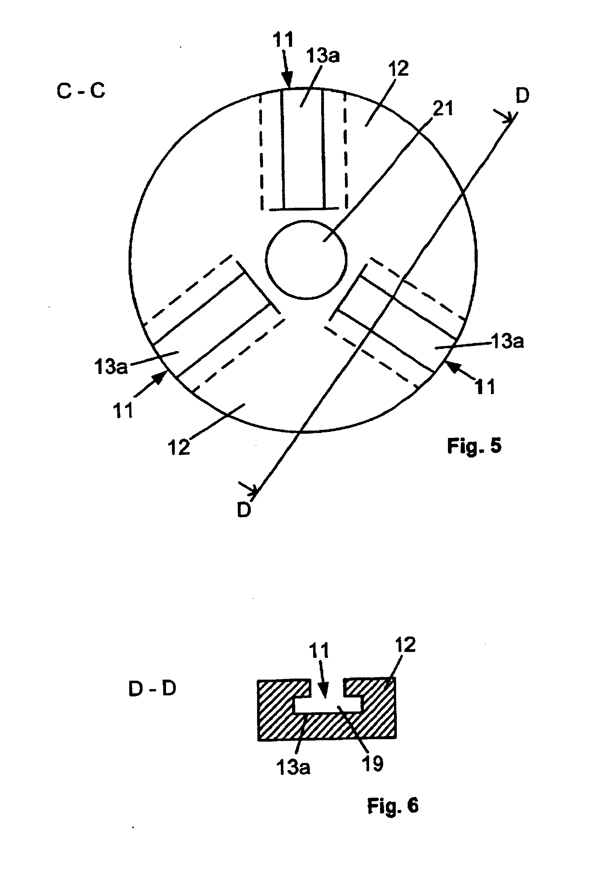

Für jeden Spannkeil 9 bilden die Radialführungsflächen 13a, 13b jeweils eine T-förmige Radialführung 11 (vgl. z. B. Fig. 6). Jede T-förmige Radialführung 11 weist eine T-förmige Führungsnut 19 in dem Radialführungskörper 12 und einen dazu passenden T-förmigen Führungskopf 17 an dem betreffenden Spannkeil 9 auf.

Für jeden Spannkeil 9 bilden weiterhin die Schrägführungsflächen 14a, 14b jeweils eine Schwalbenschwanz-förmige Schrägführung 15. Jede Schwalbenschwanz-förmige Schrägführung 15 weist eine Schwalbenschwanz-Führungsnut 20 in dem Schrägführungskörper 16 und einen dazu passenden Schwalbenschwanz-Führungskopf 18 an dem betreffenden Spannkeil 9 auf. Der Vorteil einer Auslegung der Schrägführung 15 als Schwalbenschwanz-Führung ist die geringe radiale Bauhöhe derselben, so dass die bevorzugte Ausführungsform der erfindungsgemäßen Rohrbearbeitungsvorrichtung 1 auch für Rohre 7 kleinen Durchmessers geeignet ist.

Sowohl die Radialführung 11 als auch die Schrägführung 15 weisen in der bevorzugten Ausführungsform hinterschnittene Führungsnuten 19, 20 und dazu korrespondierende Führungsköpfe 17, 18 auf. Alternativ zu einer Konstruktion, bei der die jeweiligen Führungsnuten 19, 20 dem Radialführungskörper 12 und dem Schrägführungskörper 16 und die korrespondierenden Führungsköpfe 17, 18 den Spannkeilen 9 zugeordnet sind, ist auch eine Konstruktion denkbar, bei der die jeweiligen Führungsnuten 19, 20 an den Spannkeilen 9 angeordnet sind, während der Radial-führungskörper 12 und der Schrägführungskörper 16 die entsprechenden Führungsköpfe 17, 18 aufweisen. Auch beliebige andere Kombinationen (z. B. eine Anbringung des Führungskopfes 17 der Radialführung 11 und der Führungsnut 20 der Schrägführung 15 am Spannkeil 9 und der jeweils korrespondierenden Komponenten am Radialführungskörper 12 bzw. am Schrägführungskörper 16) sind denkbar. Neben einer T-förmigen Führung und einer Schwalbenschwanzführung kommen auch andere Führungen, wie z. B. Flachführungen, Prismenführungen oder zylindrische Führungen in Frage, wobei jede der genannten Führungen sowohl als Radialführung als auch als Schrägführung denkbar ist.

Der Radialführungskörper 12 ist in der hier beschriebenen bevorzugten Ausführungsform zylinderförmig ausgebildet und hat in seiner Mitte ein Durchgangsloch 21. Der Radialführungskörper 12 ist an einer in der axialen Längsrichtung, d. h. also in Richtung der Längsachse 10 bewegbar angeordneten Betätigungsstange 22 befestigt. Die Befestigung erfolgt in der bevorzugten Ausführungsform mittels einer Befestigungsvorrichtung in Form einer Mutter 23. Dazu weist die Betätigungsstange 22 ein Gewinde auf, welches an ihrem dem Rohr zugewandten Ende angeordnet ist. Selbstverständlich wäre auch jegliche andere Befestigung oder kraftschlüssige Anordnung, beispielsweise mittels eines Bolzens oder Splints, oder aber auch mittels einer Presspassung denkbar.

Das Durchgangsloch 21 des Radialführungskörpers 12 weist an seinem der Werkzeugaufnahmeeinrichtung 4 abgewandten Ende einen (sich entlang der Längsachse 10 erstreckenden) Abschnitt mit einer unrunden Querschnittsform auf. Die Betätigungsstange 22 weist einen dazu korrespondierenden Abschnitt auf, der eine unrunde Querschnittsform passender Größe aufweist. Durch diese Konstruktion wird erreicht, dass der Radialführungskörper 12 drehfest an der Betätlgungsstange 22 angeordnet ist, d. h. dass sich der Radialführungskörper 12 relativ zur Betätigungsstange 22 nicht drehen kann. Der unrunde Querschnitt ist in der beschriebenen bevorzugten Ausführungsform als am Umfangsmantel abgeflachter Abschnitt der Betätigungsstange 22 ausgebildet. Der Radialführungskörper 12 weist eine dazu korrespondierende Ausgestaltung auf. Ferner sorgt ein Absatz, welcher an der Betätigungsstange 22 und korrespondierend hierzu am Radialführungskörper 12 ausgebildet ist dafür, dass der Radialführungskörper 12 in Längsrichtung ortsfest auf der Betätigungsstange 22 fixiert ist.

Der Schrägführungskörper 16 ist in der beschriebenen Ausführungsform integral mit einem hohlen Mast 24 ausgebildet. Alternativ könnte der Schrägführungskörper 16 auch als eigenständiges Element an dem Mast 24 angeordnet, insbesondere befestigt sein (beispielsweise durch ein am Mast 24 ausgebildetes Außengewinde, welches zu einem am Schrägführungskörper 16 ausgebildeten Innengewinde korrespondiert oder aber auch durch eine Verklebung, Verlötung, Verschweißung oder beispielsweise auch durch eine Madenschraube).

Der Mast 24 ist bezüglich der axialen Längsachse 10 beweglich zu der Werkzeugaufnahmeeinrichtung 4 (sowie zum Gehäuse 2) angeordnet. Die Betätigungsstange 22 ist in dem Mast 24 relativ zu diesem sowie ebenfalls relativ zu der Werkzeugaufnahmeeinrichtung 4 entlang der axialen Längsachse 10 beweglich bzw. verschieblich angeordnet. Damit kann einerseits die Betätigungsstange 22 axial relativ zum Mast 24 bewegt werden und andererseits kann der Mast 24 in der axialen Längsrichtung gegenüber der Werkzeugaufnahmeeinrichtung 4 bzw. gegenüber dem Werkzeugträger bewegt werden.

Die Relativbeweglichkeit zwischen Mast 24 und Betätigungsstange 22 sorgt dafür, dass die Spannkeile 9, welche in dem an der Betätigungsstange 22 befestigten Radialführungskörper 12 radial geführt sind, entlang der am Mast 24 angeordneten und dem Schrägführungskörper 16 zuzuordnenden Schrägführungsflächen 14a axial bewegt werden können. Dies führt dazu, dass bei einer Relativbewegung der Betätigungsstange 22 gegenüber dem Mast 24 entlang der axialen Längsachse 10 aus dem Rohr 7 heraus, die Spannkeile 9 radial nach außen verschoben werden und sich der Innenwand des Rohres 7 annähern. Bei einer Relativbewegung in die entgegengesetzte Richtung bewegen sich die Spannkeile 9 von der Innenwand des Rohres 7 weg.

Eine Spannung bzw. Fixierung des Rohres 7 vor der geplanten Bearbeitung wird demnach dadurch realisiert, dass die Betätigungsstange 22 solange entlang der axialen Längsachse 10 in eine Richtung von den Spannkeilen 9 zu dem Gehäuse 2 hin bewegt wird (der Mast 24 verbleibt hierbei ortsfest), bis die Spannkeile 9 an der Innenseite des Rohrs 7 anliegen und dieses fest in seiner Position halten. Danach wird die Betätigungsstange 22 in ihrer Position mittels einer Handhabe fixiert.

Neben der vorstehend beispielhaft beschriebenen manuellen Bedienung bzw. Betätigung der Spannkeile 9 ist selbstverständlich auch eine anderweitige Betätigung der Spannkeile 9 bzw. der Betätigungsstange 22 mittels einer elektrischen (elektromotorischen), hydraulischen oder auch pneumatischen Betätigungs- und/oder Arretiervorrichtung denkbar. Es sind auch sämtliche Kombinationen der Bedienungsweisen denkbar, so dass beispielsweise eine Betätigung der Betätigungsstange 22 pneumatisch erfolgen kann, während die Fixierung manuell oder elektrisch erfolgt. Beispielsweise wäre auch eine hydraulische Betätigung der Betätigungsstange 22 bei einer pneumatischen Fixierung deren Position denkbar.

Nachdem das Rohr 7 fixiert ist, kann mit der Bearbeitung desselben begonnen werden. Die Relativbeweglichkeit zwischen der Werkzeugaufnahmeeinrichtung 4 (einschließlich Gehäuse 2 und Handhabe 3) und dem Mast 24 stellt dabei sicher, dass die Werkzeugaufnahmeeinrichtung 4 mitsamt dem Werkzeugträger und der Schneidplatte entlang der axialen Längsachse 10 gegenüber dem Rohr 7 bewegbar ist und somit ein Vorschub des Werkzeugs in Richtung des Rohres 7 bzw. in das Rohr 7 hinein sowie eine entgegengesetzte Bewegung möglich sind. Zur Bearbeitung wird die Werkzeugaufnahmeeinrichtung 4 mittels eines im Gehäuse 2 befindlichen (nicht dargestellten) Elektromotors, welcher im Bereich der Handhabe 3 platziert ist, über ein ebenfalls nicht dargestelltes Getriebe relativ zum Rohr 7 sowie zum Gehäuse 2 in Rotation versetzt, sodass die Werkzeugaufnahmeeinrichtung 4 samt Werkzeugträger 5 und Schneidplatte 6 um die axiale Längsachse 10 rotiert.

Der nötige Werkzeugvorschub wird über eine Vorschubeinrichtung erzielt, welche das Gehäuse 2 samt Werkzeugaufnahmeeinrichtung 4 mit Werkzeugträger und Schneidplatte entlang der axialen Längsachse 10 zum Rohr 7 hin bewegt bzw. vorschiebt.

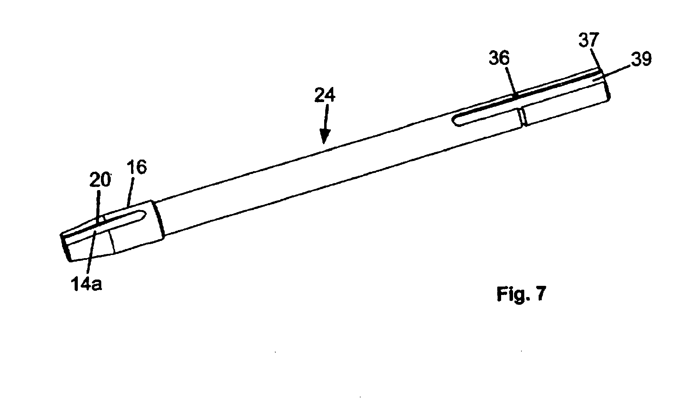

Die Vorschubüberwurfhülse weist ein Innengewinde auf, welches mit einem korrespondierenden, am Mast 24 angebrachten Außengewinde in Eingriff steht. Das Außengewinde am Mast 24 erstreckt sich dabei von einem Gewindeeinstich 36 bis zum Ende 37 des Masten 24 (vgl. hierzu z. B. Fig. 7, aus welcher der Gewindeeinstich 36 ersichtlich ist; das Gewinde selbst ist aus dieser Figur nicht ersichtlich). Durch eine Drehbewegung (Rechtsdrehung) der Vorschubüberwurfhülse wird das Gehäuse 2 mit der Werkzeugaufnahmeeinrichtung 4, dem Werkzeugträger 5 und der Schneidplatte am Mast 24 entlang in Richtung des Rohres 7 vorgeschoben. Um die Drehbarkeit der Vorschubüberwurfhülse gegenüber dem Gehäuse 2 sicher zu stellen, läuft diese auf zwischen dem Gehäuse 2 und der Vorschubüberwurfhülse (in jeweils hierfür in der Vorschubüberwurfhülse und im Gehäuse 2 vorgesehenen Aussparungen) angeordneten Kugeln 38. Um ein Verdrehen des Masts 24 im Gehäuse zu verhindern, weist dieser (vgl. hierzu Fig. 7) eine sich entlang der axialen Längsachse 10 erstreckende Passnut 39 auf. Die Verdrehsicherung wird dabei mittels einer mit einer Passfeder (nicht dargestellt) in Wirkeingriff stehenden Madenschraube erreicht. Alternativ zu der vorstehend beschriebenen Vorschubeinrichtung sind sämtliche andere Vorschubvorrichtungen beispielsweise auf pneumatischer, hydraulischer oder aber auch elektromotorischer Basis

Wie es der Darstellung in Fig. 1 entnommen werden kann, ist an dem vorderen Ende der Rohrbearbeitungsvorrichtung ein Dichtkörper 50 mit einem als Bürstendichtung ausgebildeten Dichtelement 51 vorgesehen. Im Einzelnen ist der Dichtkörper 50 mit der in axialer Längsrichtung 10 relativ zu der Werkzeugaufnahmeeinrichtung 4 bewegbaren Betätigungsstange 22 lösbar befestigt. Hierzu kommt eine in Fig. 1 nur schematisch dargestellte Mutter bzw. Schraube 23 zum Einsatz, welche auf den vorderen Endbereich der Betätigungsstange 22 aufgeschraubt ist.

Wie in Fig. 1 dargestellt, ist der Dichtkörper 50 zusammen mit dem als Bürstendichtung ausgebildeten Dichtelement 51 derart ausgeführt, dass der Dichtkörper 50 in seinem im Endbereich 7' des zu bearbeitenden Rohres 7 eingeführten Zustand formschlüssig an der Innenwand des zu bearbeitenden Rohres 7 anliegt. Auf diese Weise wird das zu bearbeitende Rohr 7 in einen der Werkzeugaufnahmeeinrichtung 4 zugewandten ersten Bereich 7.1 und einen der Werkzeugaufnahmeeinrichtung 4 abgewandten zweiten Bereich 7.2 unterteilt.

Bei der exemplarischen Ausführungsform der erfindungsgemäßen Rohrbearbeitungsvorrichtung, wie sie beispielswelse in Fig. 1 dargestellt ist, ist vorgesehen, dass zusammen mit dem Dichtkörper 50 auch die Innenspanneinrichtung 8 and der in axialer Längsrichtung 10 relativ zu der Werkzeugaufnahmeeinrichtung 4 bewegbaren Betätigungsstange 22 befestigt ist. Im Einzelnen ist dabei die Innenspanneinrichtung 8 zwischen dem Dichtkörper 50 und der Werkzeugaufnahmeeinrichtung 4 angeordnet und liegt somit in dem mit dem Dichtkörper 50 unterteilten ersten Bereich 7.1. Die bei der Bearbeitung insbesondere bei einer spanabhebenden Bearbeitung, anfallenden Späne, welche in das Rohr 7 hineinfallen, werden aufgrund des Vorsehens des Dichtkörpers, welcher bei der exemplarischen Ausführungsform mit einem als Bürstendichtung ausgebildeten Dichtelement 51 versehen ist, blockiert, in den hinteren Bereich des zu bearbeitenden Rohres (zweiter Bereich 7.2) einzudringen und gegebenenfalls verloren zu gehen. Hierzu ist es bevorzugt, wenn das als Bürstendichtung ausgebildete Dichtelement 51 in dem im Endbereich 7' des zu bearbeitenden Rohres 7 eingeführten Zustand des Dichtkörpers 50 einen Spalt S zwischen den Dichtkörper 50 und der Innenwand des zu bearbeitenden Rohres 7 abdichtet.

Die Erfindung ist nicht auf das unter Bezugnahme auf die Zeichnungen zuvor beschriebene exemplarische Ausführungsform der Rohrbearbeitungsvorrichtung 1 beschränkt. Vielmehr sind sämtliche in den Anmeldeunterlagen offenbarten Merkmale einzeln oder in Kombination bei der Rohrbearbeitungsvorrichtung realisierbar.

Insbesondere ist denkbar, wenn der Dichtkörper 50 zusätzlich oder alternativ zu dem als Büstendichtung ausgebildeten Dichtelement 51 ein als Lippendichtung ausgebildetes Dichtelement 51' aufweist, welches in dem im Endbereich 7' des zu bearbeitenden Rohres 7 eingeführten Zustand des Dichtkörpers 50 den Spalt S zwischen dem Dichtkörper 50 und der Innenwand des zu bearbeitenden Rohres 7 abdeckt.

Gleichwohl ist es denkbar, den Dichtkörper 50 aus einem elastischen Werkstoff zu bilden, welcher unter Querschnittsverringerung elastisch deformierbar ist, sodass sichergestellt werden kann, einerseits dass sich der Dichtkörper mühelos dem Endbereich des zu bearbeitenden Rohres einführen lässt, und andererseits dass der Dichtkörper in seinem im Endbereich 7' des zu bearbeitenden Rohres 7 eingeführten Zustand formschlüssig an der Innenwand des zu bearbeitenden Rohres anliegt und einen Fremdkörperübergang zwischen dem ersten und dem zweiten Bereich verhindert.

Andererseits ist es denkbar, den Dichtkörper 50 auch ohne Dichtelemente, beispielsweise in Gestalt einer Bürstendichtung oder einer Lippendichtung auszuführen.

Insbesondere hierbei ist es bevorzugt, wenn der Dichtkörper 50 eine sich verjüngende, insbesondere konisch zulaufende Längsschnittgeometrie aufweist, bei welcher der verjüngte Endbereich des Dichtkörpers 50 von der Werkzeugeinrichtung 4 wegzeigt. Durch diese sich verjüngende Formgebung des Dichtkörpers weist dieser eine Eigenzentrierfunktion auf, was das Einführen des Dichtkörpers in den Endbereich des zu bearbeitenden Rohres vereinfacht.

Alternativ oder zusätzlich hierzu ist es ferner denkbar, wenn der Dichtkörper 50 mindestens eine sich parallel zur axialen Längsrichtung 10 der Rohrbearbeitungsvorrichtung 1 erstreckende Führungsfläche aufweist, um dem Dichtkörper 50 entlang der Innenwand des Rohres 7 während des Einführvorgangs führen zu lassen.

## Patentansprüche

1. Rohrbearbeitungsvorrichtung (1) zum Bearbeiten eines rohrförmigen Körpers, insbesondere zum Bearbeiten des Endes eines Rohres, wobei die Rohrbearbeitungsvorrichtung (1) folgendes aufweist:
- eine Innenspanneinrichtung (8), welche geeignet zum Einführen in einen Endbereich (7') eines zu bearbeitenden Rohres (7) ausgebildet ist und mindestens drei Spannkeile (9) aufweist, welche radial zu einer axialen Längsachse (10) der Rohrbearbeitungsvorrichtung (1) relativ zu dem zu bearbeitenden Rohr (7) bewegbar sind zum lösbaren Fixieren der Innenspanneinrichtung (8) am Endbereich (7') des zu bearbeitenden Rohres (7); und
- eine Werkzeugaufnahmeeinrichtung (4) zum Aufnehmen von mindestens einem für eine Rohrbearbeitung vorgesehenen Werkzeug, wobei die Werkzeugaufnahmeeinrichtung (4) konzentrisch zu der axialen Längsachse (10) der Rohrbearbeitungsvorrichtung (1) und um diese Längsachse (10) relativ zu der Innenspanneinrichtung (8) drehbar angeordnet ist,
**dadurch gekennzeichnet,dass**
die Rohrbearbeitungsvorrichtung (1) ferner einen mit der Innenspanneinrichtung (8) in den Endbereich (7') des zu bearbeitenden Rohres (7) einführbaren Dichtkörper (50) aufweist zum räumlichen Unterteilen des zu bearbeitenden Rohres (7) in einen der Werkzeugaufnahmeeinrichtung (4) zugewandten Bereich (7.2) und einen der Werkzeugaufnahmeeinrichtung (4) abgewandten Bereich (7.1),
dass die Innenspanneinrichtung (8) und der Dichtkörper (50) an einer in axialer Längsrichtung (10) relativ zu der Werkzeugaufnahmeeinrichtung (4) bewegbaren Betätigungsstange (22) befestigt sind, wobei die Innenspanneinrichtung (8) zwischen dem Dichtkörper (50) und der Werkzeugaufnahmeeinrichtung (4) im Bereich (7.2) angeordnet ist.

2. Rohrbearbeitungsvorrichtung (1) nach Anspruch 1, wobei der Dichtkörper (50) ausgebildet ist, in seinem im Endbereich (7') des zu bearbeitenden Rohres (7) eingeführten Zustand formschlüssig an der Innenwand des zu bearbeitenden Rohres (7) anzuliegen.

3. Rohrbearbeitungsvorrichtung (1) nach Anspruch 1 oder 2, insbesondere nach Anspruch 2, wobei der Dichtkörper (50) mindestens ein als Bürstendichtung ausgebildetes Dichtelement (51) aufweist, welches in dem im Endbereich (7') des zu bearbeitenden Rohres (7) eingeführten Zustand des Dichtkörpers (50) einen Spalt (S) zwischen dem Dichtkörper (50) und der Innenwand des zu bearbeitenden Rohres (7) abdichtet.

4. Rohrbearbeitungsvorrichtung (1) nach einem der vorhergehenden Ansprüche, insbesondere nach Anspruch 2, wobei der Dichtkörper (50) mindestens ein als Lippendichtung ausgebildetes Dichtelement (51') aufweist, welches in dem im Endbereich (7') des zu bearbeitenden Rohres (7) eingeführten Zustand des Dichtkörpers (50) einen Spalt (S) zwischen dem Dichtkörper (50) und der Innenwand des zu bearbeitenden Rohres (7) abdichtet.

5. Rohrbearbeitungsvorrichtung (1) nach einem der vorhergehenden Ansprüche, insbesondere nach Anspruch 2, wobei der Dichtkörper (50) aus einem elastischem Werkstoff gebildet und unter Querschnittsverringerung elastisch deformierbar ist.

6. Rohrbearbeitungsvorrichtung (1) nach einem der vorhergehenden Ansprüche, insbesondere nach Anspruch 5, wobei der Dichtkörper (50) eine sich verjüngende, insbesondere konisch verjüngende Längsschnittgeometrie aufweist, wobei der verjüngte Endbereich des Dichtkörpers (50) in eine Richtung entgegengesetzt zur Werkzeugaufnahmeeinrichtung (4) zeigt.

7. Rohrbearbeitungsvorrichtung (1) nach einem der vorhergehenden Ansprüche, wobei der Dichtkörper (50) mindestens eine sich parallel zur axialen Längsrichtung (10) der Rohrbearbeitungsvorrichtung (1) erstreckende Führungsfläche aufweist zum Führen des Dichtkörpers (50) entlang der Innenwand des Rohres (7) während des Einführvorgangs.

8. Rohrbearbeitungsvorrichtung (1) nach einem der vorhergehenden Ansprüche, wobei die Spannkeile (9) durch Radialführungsflächen (13a) eines Radialführungskörpers (12) radial geführt sind und durch spitzwinkelig zur Längsachse (10) sich erstreckende Schrägführungsflächen (14a) eines Schrägführungskörpers (16) schräg geführt sind, und wobei der Radialführungskörper (12) relativ zu dem Schrägführungskörper (16) axial zu der Längsachse (10) der Rohrbearbeitungsvorrichtung (1) bewegbar ist, sodass die Spannkeile (9), parallel zueinander bleibend, ins Längsrichtung (10) und dabei gleichzeitig radial bewegt werden. 8

9. Rohrbearbeitungsvorrichtung (1) nach Anspruch 8, wobei die Radialführungsflächen (13a) des Radialführungskörpers (12) und die Radialführungsflächen (13b) der Spannkeile (9) einander quer zur Radialrichtung hintergreifen, sodass die Spannkeile (9) am Radialführungskörper (12) in axialer Richtung gehalten werden.

10. Rohrbearbeitungsvorrichtung nach Anspruch 8 oder 9, wobei der Radialführungskörper (12) an der in axialer Längsrichtung (10) relativ zu der Werkzeugaufnahmeeinrichtung (4) bewegbaren Betätigungsstange (22) befestigt ist.

11. Rohrbearbeitungsvorrichtung (1) nach einem der Ansprüche 8 bis 10, wobei für jeden Spannkeil (9) die Schrägführungsflächen (14a) jeweils eine schwalbenschwanzförmige Schrägführung (15) bilden.

## Claims

1. Pipe machining apparatus (1) for machining a tubular body, in particular for machining the end of a pipe, wherein the pipe machining apparatus (1) has the following:
- an internal clamping device (8) which is designed so as to be suitable for inserting into an end region (7') of a pipe (7) to be machined and has at least three clamping wedges (9) which can be moved radially to an axial longitudinal axis (10) of the pipe machining apparatus (1) relative to the pipe (7) to be machined for releasably fixing the internal clamping device (8) on the end region (7') of the pipe (7) to be machined; and
- a tool locating device (4) for locating at least one tool provided for pipe machining, wherein the tool locating device (4) is arranged concentrically to the axial longitudinal axis (10) of the pipe machining apparatus (1) and so as to be rotatable about this longitudinal axis (10) relative to the internal clamping device (8),
**characterized in that**
the pipe machining apparatus (1) furthermore has a sealing body (50) which can be inserted with the internal clamping device (8) into the end region (7') of the pipe (7) to be machined and which is intended for spatially subdividing the pipe (7) to be machined into a region (7.2) facing the tool locating device (4) and a region (7.1) remote from the tool locating device (4), **in that** the internal clamping device (8) and the sealing body (50) are fastened to an actuating rod (22) movable in the axial longitudinal direction (10) relative to the tool locating device (4), wherein the internal clamping device (8) is arranged between the sealing body (50) and the tool locating device (4) in the region (7.2).

2. Pipe machining apparatus (1) according to Claim 1, wherein the sealing body (50) is designed for bearing in a positive-locking manner against the inner wall of the pipe (7), to be machined, in the state in which it is inserted in the end region (7') of the pipe (7) to be machined.

3. Pipe machining apparatus (1) according to Claim 1 or 2, in particular according to Claim 2, wherein the sealing body (50) has at least one sealing element (51) which is designed as a brush seal and which, in the state in which the sealing body (50) is inserted in the end region (7') of the pipe (7) to be machined, seals a gap (S) between the sealing body (50) and the inner wall of the pipe (7) to be machined.

4. Pipe machining apparatus (1) according to one of the preceding claims, in particular according to Claim 2, wherein the sealing body (50) has at least one sealing element (51') which is designed as a lip seal and which, in the state in which the sealing body (50) is inserted in the end region (7') of the pipe (7) to be machined, seals a gap (S) between the sealing body (50) and the inner wall of the pipe (7) to be machined.

5. Pipe machining apparatus (1) according to one of the preceding claims, in particular according to Claim 2, wherein the sealing body (50) is formed from an elastic material and can be deformed elastically with the cross-sectional area being reduced.

6. Pipe machining apparatus (1) according to one of the preceding claims, in particular according to Claim 5, wherein the sealing body (50) has a narrowing, in particular conically narrowing, longitudinal section geometry, wherein the narrowed end region of the sealing body (50) points in a direction opposed to the tool locating device (4).

7. Pipe machining apparatus (1) according to one of the preceding claims, wherein the sealing body (50) has at least one guide surface which extends parallel to the axial longitudinal direction (10) of the pipe machining apparatus (1) and is intended for guiding the sealing body (50) along the inner wall of the pipe (7) during the insertion operation.

8. Pipe machining apparatus (1) according to one of the preceding claims, wherein the clamping wedges (9) are radially guided by radial guide surfaces (13a) of a radial guide body (12) and are guided obliquely by sloping guide surfaces (14a), extending at an acute angle to the longitudinal axis (10), of a sloping guide body (16), and wherein the radial guide body (12) is movable relative to the sloping guide body (16) axially to the longitudinal axis (10) of the pipe machining apparatus (1), such that the clamping wedges (9) are moved, such as to remain parallel to one another, in the longitudinal direction (10) and at the same time radially in the process.

9. Pipe machining apparatus (1) according to Claim 8, wherein the radial guide surfaces (13a) of the radial guide body (12) and the radial guide surfaces (13b) of the clamping wedges (9) engage one behind the other transversely to the radial direction, such that the clamping wedges (9) are held on the radial guide body (12) in the axial direction.

10. Pipe machining apparatus according to Claim 8 or 9, wherein the radial guide body (12) is fastened to the actuating rod (22) movable in the axial longitudinal direction (10) relative to the tool locating device (4).

11. Pipe machining apparatus (1) according to one of Claims 8 to 10, wherein the sloping guide surfaces (14a) form a respective dovetailed sloping guide (15) for each clamping wedge (9).

## Revendications

1. Dispositif d'usinage de tubes (1) pour usiner un corps tubulaire, en particulier pour usiner l'extrémité d'un tube, le dispositif d'usinage de tubes (1) comprenant ce qui suit :
- un dispositif de serrage intérieur (8) qui est réalisé de manière appropriée pour être inséré dans une région d'extrémité (7') d'un tube (7) devant être usiné et qui comprend au moins trois clavettes de serrage (9) qui peuvent être déplacées par rapport au tube (7) devant être usiné radialement par rapport à un axe longitudinal axial (10) du dispositif d'usinage de tubes (1) pour fixer de manière amovible le dispositif de serrage intérieur (8) à une région d'extrémité (7') du tube (7) devant être usiné ; et
- un dispositif de réception d'outil (4) pour recevoir au moins un outil prévu pour un usinage de tubes, le dispositif de réception d'outil (4) étant disposé de manière concentrique à l'axe longitudinal axial (10) du dispositif d'usinage de tubes (1) et de manière rotative par rapport au dispositif de serrage intérieur (8) autour de cet axe longitudinal (10),
**caractérisé en ce que**
le dispositif d'usinage de tubes (1) comprend en outre un corps d'étanchéité (50) pouvant être inséré avec le dispositif de serrage intérieur (8) dans la région d'extrémité (7') du tube (7) devant être usiné pour la division spatiale du tube (7) devant être usiné en une région (7.2) tournée vers le dispositif de réception d'outil (4) et une région (7.1) opposée au dispositif de réception d'outil (4),
**en ce que** le dispositif de serrage intérieur (8) et le corps d'étanchéité (50) sont fixés à une tige d'actionnement (22) pouvant être déplacée par rapport au dispositif de réception d'outil (4) dans la direction longitudinale axiale (10), le dispositif de serrage intérieur (8) étant disposé entre le corps d'étanchéité (50) et le dispositif de réception d'outil (4) dans la région (7.2).

2. Dispositif d'usinage de tubes (1) selon la revendication 1, dans lequel le corps d'étanchéité (50) est réalisé pour s'appliquer par complémentarité de formes contre la paroi intérieure du tube (7) devant être usiné dans son état inséré dans la région d'extrémité (7') du tube (7) devant être usiné.

3. Dispositif d'usinage de tubes (1) selon la revendication 1 ou 2, en particulier selon la revendication 2, dans lequel le corps d'étanchéité (50) comprend au moins un élément d'étanchéité (51), réalisé sous forme de joint à brosse, qui ferme hermétiquement un interstice (S) entre le corps d'étanchéité (50) et la paroi intérieure du tube (7) devant être usiné dans l'état inséré dans la région d'extrémité (7') du tube (7) devant être usiné du corps d'étanchéité (50).

4. Dispositif d'usinage de tubes (1) selon l'une quelconque des revendications précédentes, en particulier selon la revendication 2, dans lequel le corps d'étanchéité (50) comprend au moins un élément d'étanchéité (51'), réalisé sous forme de joint à lèvre, qui ferme hermétiquement un interstice (S) entre le corps d'étanchéité (50) et la paroi intérieure du tube (7) devant être usiné dans l'état inséré dans la région d'extrémité (7') du tube (7) devant être usiné du corps d'étanchéité (50).

5. Dispositif d'usinage de tubes (1) selon l'une quelconque des revendications précédentes, en particulier selon la revendication 2, dans lequel le corps d'étanchéité (50) est formé à partir d'un matériau élastique et peut être déformé élastiquement avec diminution de sa section transversale.

6. Dispositif d'usinage de tubes (1) selon l'une quelconque des revendications précédentes, en particulier selon la revendication 5, dans lequel le corps d'étanchéité (50) présente une géométrie en section longitudinale se rétrécissant, en particulier se rétrécissant de manière conique, la région d'extrémité rétrécie du corps d'étanchéité (50) pointant dans une direction opposée au dispositif de réception d'outil (4).

7. Dispositif d'usinage de tubes (1) selon l'une quelconque des revendications précédentes, dans lequel le corps d'étanchéité (50) comprend au moins une surface de guidage s'étendant parallèlement à la direction longitudinale axiale (10) du dispositif d'usinage de tubes (1) pour guider le corps d'étanchéité (50) le long de la paroi intérieure du tube (7) pendant l'opération d'insertion.

8. Dispositif d'usinage de tubes (1) selon l'une quelconque des revendications précédentes, dans lequel les clavettes de serrage (9) sont guidées radialement par des surfaces de guidage radial (13a) d'un corps de guidage radial (12) et sont guidées de manière oblique par des surfaces de guidage oblique (14a), s'étendant suivant un angle aigu par rapport à l'axe longitudinal (10), d'un corps de guidage oblique (16), et dans lequel le corps de guidage radial (12) peut être déplacé par rapport au corps de guidage oblique (16) axialement par rapport à l'axe longitudinal (10) du dispositif d'usinage de tubes (1), de sorte que les clavettes de serrage (9), tout en restant parallèles les unes aux autres, soient déplacées dans la direction longitudinale (10) et en l'occurrence simultanément radialement.

9. Dispositif d'usinage de tubes (1) selon la revendication 8, dans lequel les surfaces de guidage radial (13a) du corps de guidage radial (12) et les surfaces de guidage radial (13b) des clavettes de serrage (9) viennent en prise par l'arrière les unes avec les autres transversalement par rapport à la direction radiale, de sorte que les clavettes de serrage (9) soient retenues sur le corps de guidage radial (12) dans la direction axiale.

10. Dispositif d'usinage de tubes selon la revendication 8 ou 9, dans lequel le corps de guidage radial (12) est fixé à la tige d'actionnement (22) pouvant être déplacée par rapport au dispositif de réception d'outil (4) dans la direction longitudinale axiale (10).

11. Dispositif d'usinage de tubes (1) selon l'une quelconque des revendications 8 à 10, dans lequel, pour chaque clavette de serrage (9), les surfaces de guidage oblique (14a) forment à chaque fois un guidage oblique (15) en queue d'aronde.
